# EUROPÄISCHE PATENTANMELDUNG

(11) **EP 3 330 149 A1**
(43) Veröffentlichungstag der Anmeldung: **06.06.2018**
(21) Anmeldenummer: 17203378.9
(22) Anmeldetag: 23.11.2017
(51) Int. Cl.: B60W 50/08, B60W 50/14

(54) **KRAFTFAHRZEUG MIT EINEM FAHRERASSISTENZSYSTEM**

(30) Priorität: 26.11.2016 DE 102016014167
(71) Anmelder: Leopold Kostal GmbH & Co. KG, 58513 Lüdenscheid (DE)
(72) Erfinder: Schirp, Christian, 44789 Bochum (DE)
(74) Vertreter: Kerkmann, Detlef

(57) **Zusammenfassung**

Beschrieben wird ein Kraftfahrzeug mit einem Fahrerassistenzsystem, mit einer Steuervorrichtung, die zumindest in einem ersten Funktionsmodus eine automatische, vollständig fahrerunabhängigen Steuerung des Kraftfahrzeugs ausführt, wobei die Steuervorrichtung zumindest eine Kamera zu Erfassung des Fahrzeugaußenraums, eine Rechnereinheit und eine Kommunikationseinheit zur Verbindung mit einem Datennetzwerk, sowie eine durch die Rechnereinheit betätigbare Aktuatorik zur Steuerung des Kraftfahrzeug aufweist, und mit einem von der Rechnereinheit angesteuertem Head-Up-Display zur Darstellung von Informationen oder Symbolen im Bereich oder auf der Windschutzscheibe des Kraftfahrzeugs wobei die Steuervorrichtung zumindest einen weiteren zweiten Funktionsmodus aufweist, in dem eine begrenzte Beeinflussungsmöglichkeit der Steuerung des Kraftfahrzeugs, durch den Fahrzeugführer möglich ist, wobei das Ausmaß der Beeinflussungsmöglichkeit durch die Steuervorrichtung variabel festgelegt wird.

## Beschreibung

Die Erfindung betrifft ein Kraftfahrzeug mit einem Fahrerassistenzsystem, mit einer Steuervorrichtung, die zumindest in einem ersten Funktionsmodus eine automatische, vollständig fahrerunabhängigen Steuerung des Kraftfahrzeugs ausführt, wobei die Steuervorrichtung zumindest eine Kamera zu Erfassung des Fahrzeugaußenraums, eine Rechnereinheit und eine Kommunikationseinheit zur Verbindung mit einem Datennetzwerk, sowie eine durch die Rechnereinheit betätigbare Aktuatorik zur Steuerung des Kraftfahrzeug aufweist, und mit einem von der Rechnereinheit angesteuertem Head-Up-Display zur Darstellung von Informationen oder Symbolen im Bereich oder auf der Windschutzscheibe des Kraftfahrzeugs.

Unter einem Fahrerassistenzsystem soll hier ein in einem Kraftfahrzeug verwendetes System verstanden werden, welches Funktionen bereitstellt, die den Fahrzeugführer eines Kraftfahrzeugs in mehr oder weniger großem Umfang bei seinen Aufgaben unterstützen beziehungsweise von diesen Aufgaben entlasten kann. Speziell soll ein hier angesprochenes Fahrerassistenzsystem in der Lage sein, ein Kraftfahrzeug autonom, das heißt vollautomatisch und ohne dass ein Fahrzeugführer Einfluss nehmen muss, zu steuern.

Unter dem Begriff "Fahrzeugführer" soll hier eine Person verstanden, die sich innerhalb des in Betrieb befindlichen Kraftfahrzeugs aufhält und für dessen gegenwärtigen Betrieb operativ verantwortlich ist, und zwar unabhängig davon, ob sie die Bewegungen des Fahrzeug ursächlich und direkt steuert, also im üblich verstandenen Sinne "das Kraftfahrzeug fährt".

Es sind Fahrerassistenzsysteme bekannt, die mehrere Funktionsmodi aufweisen, von denen sich wenigstens einer auf einen vollautomatischen Betrieb des Kraftfahrzeugs bezieht. Wenigstens ein weiterer Funktionsmodus ist für einen durch einen Fahrzeugführer vollständig gelenkten oder zumindest beeinflussten Betrieb vorgesehen ist. Das Fahrerassistenzsystem kann so in bestimmten Fahrsituationen den vollautomatischen Betrieb beenden und die Kontrolle über das Fahrzeug teilweise oder ganz an den Fahrzeugführer übergeben, wobei eine Anzeigevorrichtung über die Änderung des Funktionsmodus informiert.

Die Funktionsweise solcher Fahrerassistenzsysteme geht von der impliziten Annahme aus, dass ein menschlicher Fahrzeugführer kompetenter agiert als ein vollautomatisches System und daher besonders in kritischen Fahrsituationen die Kontrolle übernehmen sollte. Diese Annahme ist, besonders für die Zukunft, immer mehr in Frage zu stellen.

Denn zum einen wird die Zuverlässigkeit von autonomen Fahrzeugen vermutlich auch in der Zukunft weiter zunehmen und damit bald die Fähigkeiten eines Durchschnittsfahrers übertreffen. Zum anderen werden mit der zunehmenden Verbreitung des autonomen Fahrens sich die menschlichen Mitfahrer an diesen Automatismus gewöhnen und daher immer weniger auf ein eigenhändiges Steuern des Fahrzeugs eingestellt sein. Auch wenn ein Fahrzeugführer derzeit noch gesetzlich dazu verpflichtet ist, sein Fahrzeug jederzeit zu beherrschen, kann es fatal ausgehen, diesem in einem überraschenden Moment und dann möglichweise noch in einer kritischen Situation, die Kontrolle über das Fahrzeug zu übergeben. Es besteht die erhebliche Gefahr, dass der Fahrzeugführer durch eine derartige Situation überfordert wird.

Es stellte sich die Aufgabe, ein Kraftfahrzeug mit einem Fahrerassistenzsystem so auszubilden, dass derartige Probleme vermieden werden. Diese Aufgabe wird durch die Merkmalskombination des Anspruchs 1 gelöst.

Das erfindungsgemäße Fahrerassistenzsystem weist zumindest zwei Funktionsmodi auf, von denen ein erster eine vollautomatische Steuerung des Kraftfahrzeugs ausführt und ein zweiter eine eingeschränkte Beeinflussung der automatischen Steuerung durch den Fahrzeugführer ermöglicht, wobei die Steuervorrichtung das Ausmaß der Beeinflussungsmöglichkeit variabel, das heißt in Abhängigkeit vom Fahrzeugumfeld und von der aktuellen Fahrsituation festgelegt.

Das Fahrerassistenzsystem hält dabei die Fahrzeugkontrolle, insbesondere in kritischen Fahrsituationen. In weniger kritischen Fahrsituationen kann das Fahrerassistenzsystem dem Fahrzeugführer eine Beeinflussung der Fahrzeugsteuerung ermöglichen, die aber auf ein für die Sicherheit unkritisches Ausmaß begrenzt wird.

Selbstverständlich kann ein weiterer dritter Funktionsmodus vorgesehen sein, in dem der Fahrzeugführer die vollständige Kontrolle über die Fahrzeugsteuerung übernehmen kann. Diese vollständige Kontrolle muss der Fahrzeugführer aber in eigener Verantwortung übernehmen und wird dem Fahrzeugführer daher auf keinen Fall von dem Fahrerassistenzsystem automatisch zugeteilt.

Da im zweiten Funktionsmodus der Fahrzeugführer sozusagen unter Aufsicht des Fahrerassistenzsystems steht, kann die Steuerungsaufgabe besonders vorteilhaft durch Aufgabenstellungen aus dem Bereich einer erweiterten Realität (augmented reality) ergänzt werden. Hierdurch wird der Fahrzeugführer einerseits unterhalten und andererseits wird auch seine Aufmerksamkeit wach gehalten.

Das Fahrerassistenzsystem kann dazu beispielsweise durch Einblendungen auf einem Bildschirm oder vorzugsweise durch ein Head-Up-Display auf der Windschutzscheibe computerspielähnliche Situationen schaffen, welche spielerische Aufgabenstellungen an den Fahrzeugführer richtet, die dieser mit Hilfe der Fahrzeugsteuerung lösen kann. Die Beeinflussungsmöglichkeiten des Fahrzeugs durch den Fahrzeugführer werden dabei durch das Fahrerassistenzsystem jederzeit soweit begrenzt, dass in der realen Welt keine unsicheren Fahrsituationen entstehen.

Bekannt sind mobile Geräte und Fahrzeuge mit sogenannter augmentierter Realität, bei denen entweder durch Einstanzen (mobile Geräte) oder Überlagern (Head-Up Displays) von künstlich erzeugten Gegenständen oder Informationen in Bilder der realen Welt eine "angereicherte" Realität erzeugt wird. Prominente Beispiele sind beispielsweise das Spiel Pokémon Go, bei dem in die von einem mobilen Gerät per Kamera aufgenommene Umgebung Fantasiewesen eingefügt werden, sowie moderne Navigationssysteme in Fahrzeugen mit Head-Up-Displays, die unter anderem Richtungsinformationen als Bestandteil der Umgebung erscheinen lassen.

Auch bekannt sind Computerspiele, bei dem der Spieler durch Steuern einer Spielfigur durch einen Parcours Spielpunkte beispielsweise in Form von Sternen oder Münzen einsammeln muss.

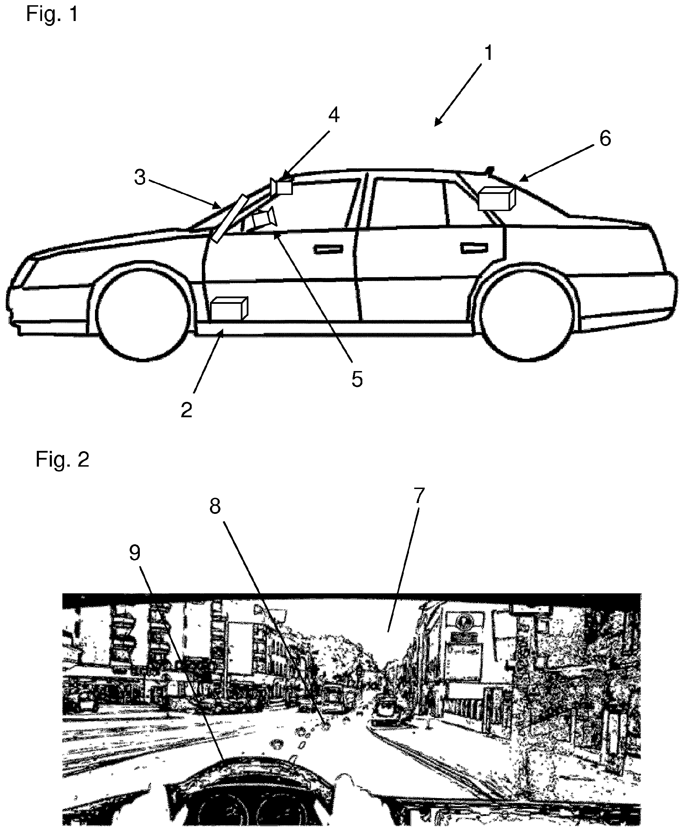

Wesentliche Hardware-Komponenten eines erfindungsgemäß aufgebauten Kraftfahrzeugs mit einem Fahrerassistenzsystem sind in der Figur 1 angedeutet. Das Kraftfahrzeug 1 verfügt mindestens über
- eine Umfeldsensorik in Form einer den Fahrzeugaußenraum erfassenden hoch auflösende Fahrerassistenzkamera 4,
- eine Rechnereinheit 2 zur Datenzusammenführung von Umgebungsinformationen, zur Bilderzeugung und gegebenenfalls zur Spielerepräsentation,
- ein Head-Up-Display 3 oder alternativ eine AR-Brille zur Visualisierung graphischer Elemente.
- In der Figur 1 nicht bildlich dargestellt, aber ebenfalls wesentlich, ist eine Aktuatorik, welche die Rechnereinheit 2 zur Steuerung des Kraftfahrzeugs betätigen kann.

Darüber hinaus können optional
- eine Fahrerbeobachtungskamera 5 für einfache Interaktionen, sowie
- eine Kommunikationseinheit 6 zur Herstellung von Datennetzwerkverbindungen (zum Beispiel Car2X) zur Interaktion mit der Umgebung, sozialen Netzwerken oder zur Spielkoordination
vorteilhaft vorgesehen werden.

Ein Problem bei einem stark assistierten Fahrzeug besteht darin, dass die Aufmerksamkeit des Fahrzeugführers durch fehlende Inanspruchnahme schnell absinkt.

Es wird ein daher ein System vorgeschlagen, bei dem insbesondere das Head-Up-Display dazu genutzt wird, dem Fahrzeugführer über die reine Navigation hinausgehende Informationen zu zeigen, die den Spieltrieb befriedigen und dadurch die Fahraufgabe interessanter gestalten können.

Beispielhaft kann die Rechnereinheit 2 aufgrund der durch den durch die Kommunikationseinheit 6 aus den Datennetzwerkverbindungen ermittelten Verlauf der Fahrstrecke und aus den durch die Fahrerassistenzkamera 4 ermittelten Umgebungsinformationen des Kraftfahrzeugs 1 den energetisch sinnvollste Kurs durch eine dem realen Verkehrsgeschehen überlagerte virtuelle Münzenspur 8 darstellen, die der Fahrzeugführer durch "überfahren" einsammeln muss, um Spielpunkte zu erlangen. Die durch das Head-Up-Display 3 eingeblendete Symbolik verschmilzt dabei, wie in der Figur 2 angedeutet, beim Blick durch die Windschutzscheibe 7 mit der realen Umgebung.

Das Agieren des Fahrzeugführers kann durch übliche Bedienelemente 9 des Kraftfahrzeugs erfasst werden. Alternativ oder zusätzlich können auch durch eine optional vorhandene Fahrerbeobachtungskamera 5 Gesten des Fahrzeugführers erfasst und von der Rechnereinheit 2 als Steuerungsanweisungen berücksichtigt werden.

Erzielte Spielpunkte können gegebenenfalls in geldwerten Nutzen wie Treibstoff umgerechnet oder rein ideell zum Wettbewerb in sozialen Medien mitgeteilt werden. Die anhand Kameras und Sensoren des Fahrerassistenzsystems gewonnenen Umgebungsdaten werden dabei dergestalt in die Berechnung des dargestellten Kurses einbezogen, dass der Kurs gefährdungsfrei für andere Verkehrsteilnehmer zu befahren ist. Auch die optimale Geschwindigkeit lässt sich über die Wertigkeit oder Dichte der Bonuspunkte steuern - so dass etwa ein Überschreiten der zulässigen Höchstgeschwindigkeit zu Punkteentfall oder Minuspunkten führt. Weiterhin ist die Darstellung von kleinteiligen überlagerten Gegenständen sinnvoll, da sie mit geringeren technischem Aufwand mit der Realität "verschmelzen".

Das überlagerte Anreizsystem kann mit zusätzlichen Herausforderungen angereichert werden, die per Reaktion des Fahrzeugführers wie Nicken, Sprach- oder Gestenbefehl angenommen werden. Eine solche Anreicherung wäre beispielsweise die Darstellung eines Paketsymbols - was bedeutet, das an einer bestimmten Stelle auf oder in der Nähe des bekannten Fahrkurses ein Brief, ein Paket oder eine Ware aufgenommen und abgegeben werden soll.

Das vorgeschlagene System kann direkt dazu das Ergebnis einer Kosten-/Nutzen-Analyse darstellen, indem die für die Beförderungsleistung gutgeschriebenen Punkte gegen den erwarteten Zeit- und Energieaufwand angezeigt werden. Handelt es sich bei der Abgabestelle des Paketes oder der Ware um einen Händler, kann ein Zusatznutzen für den Händler auch der Besuch des Fahrzeugführers und die damit verbundene Chance auf einen Umsatz sein - was wiederum zu Finanzierung des Systems Beitrag leisten kann.

Wesentlich ist, dass das Fahrerassistenzsystem die Beeinflussungsmöglichkeiten des Fahrzeugs durch den Fahrzeugführer stets auf ein sicheres Ausmaß begrenzt, wobei das Fahrerassistenzsystem durch Außenkamera, und gegebenenfalls Datenkommunikationssysteme oder andere Sensorsysteme erfasste Daten zur Bestimmung einer aktuellen Fahrsituation in diesem zweiten Funktionsmodus heranzieht.

Bei schwierigen Fahrsituationen werden die Beeinflussungsmöglichkeiten stark eingeschränkt werden, so dass sich die Fahrzeugsteuerung funktionell an eine vollständig autonome Fahrzeugsteuerung annähert.

Darüber hinaus kann in einem dritten Funktionsmodus sowohl eine automatische Fahrzeugsteuerung als auch eine Zuschaltung einer erweiterten Realität unterbunden sein. In diesem Funktionsmodus ist der Fahrzeugführer allein für die Steuerung des Kraftfahrzeugs zuständig. Das Einschalten dieses Funktionsmodus kann aber nicht automatisch durch das Fahrzeugassistenzsystem erfolgen, sondern muss willentlich und bewusst durch den Fahrzeugführer eingeleitet werden.

### Bezugszeichen

- 1: Kraftfahrzeug
- 2: Rechnereinheit (Fahrerassistenzsystem)
- 3: Head-Up-Display
- 4: Außenkamera
- 5: Fahrerbeobachtungskamera
- 6: Kommunikationseinheit (CarX2-Einheit)
- 7: Windschutzscheibe
- 8: Münzenspur
- 9: Bedienelemente

## Patentansprüche

1. Kraftfahrzeug (1) mit einem Fahrerassistenzsystem,
mit einer Steuervorrichtung, die zumindest in einem ersten Funktionsmodus eine automatische, vollständig fahrerunabhängigen Steuerung des Kraftfahrzeugs (1) ausführt,
wobei die Steuervorrichtung zumindest eine Kamera (4) zu Erfassung des Fahrzeugaußenraums, eine Rechnereinheit (2) und eine Kommunikationseinheit (6) zur Verbindung mit einem Datennetzwerk, sowie eine durch die Rechnereinheit (2) betätigbare Aktuatorik zur Steuerung des Kraftfahrzeug (1) aufweist,
und mit einem von der Rechnereinheit (2) angesteuertem Head-Up-Display (3) zur Darstellung von Informationen oder Symbolen im Bereich oder auf der Windschutzscheibe (7) des Kraftfahrzeugs (1),
**dadurch gekennzeichnet,**
**dass** die Steuervorrichtung zumindest einen weiteren zweiten Funktionsmodus aufweist, in dem eine begrenzte Beeinflussungsmöglichkeit der Steuerung des Kraftfahrzeugs (1), durch den Fahrzeugführer möglich ist,
wobei das Ausmaß der Beeinflussungsmöglichkeit durch die Steuervorrichtung variabel festgelegt wird.

2. Kraftfahrzeug mit einem Fahrerassistenzsystem nach Anspruch 1, **dadurch gekennzeichnet, dass** im zweiten Funktionsmodus Daten, Bilder oder Symbole einer "augmentend Reality" im Head-Up-Display (3) angezeigt wird.

3. Kraftfahrzeug mit einem Fahrerassistenzsystem nach Anspruch 2, **dadurch gekennzeichnet, dass** die Daten, Bilder oder Symbole der "augmentend reality" dem Fahrzeugführer Interaktionsmöglichkeiten ermöglichen.

4. Kraftfahrzeug mit einem Fahrerassistenzsystem nach Anspruch 3, **dadurch gekennzeichnet, dass** die Interaktionsmöglichkeiten zumindest teilweise vom Verkehrsgeschehen unabhängig sind.

5. Kraftfahrzeug mit einem Fahrerassistenzsystem nach Anspruch 3, **dadurch gekennzeichnet, dass** die Interaktion über Bedienelemente (9) der Fahrzeugsteuerung erfolgen

6. Kraftfahrzeug mit einem Fahrerassistenzsystem nach Anspruch 1, **dadurch gekennzeichnet, dass** als dritter Funktionsmodus eine Steuerung des Kraftfahrzeug (1) durch den Fahrzeugführer vorgesehen ist, wobei die Steuerung des nicht oder in nur geringem Maße durch das Fahrerassistenzsystem unterstützt wird.

7. Kraftfahrzeug mit einem Fahrerassistenzsystem nach Anspruch 6, **dadurch gekennzeichnet, dass** ein Übergang vom ersten oder zweiten Funktionsmodus zum dritten Funktionsmodus nicht automatisch durch das Fahrerassistenzsystem sondern nur durch eine explizite Einflussnahme des Fahrzeugführers bewirkt werden kann.
